# EUROPÄISCHE PATENTSCHRIFT

(11) **EP 3 727 919 B1**
(45) Veröffentlichungstag und Bekanntmachung des Hinweises auf die Patenterteilung: **03.05.2023**
(21) Anmeldenummer: 18807041.1
(22) Anmeldetag: 16.11.2018
(51) Int. Cl.: B60K 6/442, B60K 6/547, B60W 10/02, B60W 10/08, B60W 10/113, B60W 10/06, B60W 20/15, B60W 20/40, B60W 30/184, B60K 1/02, B60W 30/19

(54) **VERFAHREN BEI EINEM SERIELLEN FAHRBETRIEB EINES KRAFTFAHRZEUGS**
METHOD FOR A SERIAL DRIVING MODE OF A MOTOR VEHICLE
PROCÉDÉ DE CONDUITE EN SÉRIE D'UN VÉHICULE AUTOMOBILE

(30) Priorität: 19.12.2017 DE 102017223168
(43) Veröffentlichungstag der Anmeldung: 28.10.2020
(73) Patentinhaber: ZF Friedrichshafen AG, 88046 Friedrichshafen (DE)
(72) Erfinder: KALTENBACH, Johannes, 88048 Friedrichshafen (DE); ROSKE, Michael, 88046 Friedrichshafen (DE)
(86) Internationale Anmeldenummer: PCT/EP2018/081603
(87) Internationale Veröffentlichungsnummer: WO 2019/120797

(56) Entgegenhaltungen:
- WO-A1-2016/199227
- FR-A1- 3 007 696
- US-A1- 2017 137 016

## Beschreibung

Die Erfindung betrifft ein Verfahren bei einem seriellen Fahrbetrieb eines Kraftfahrzeugs mit einem Getriebe, das eine erste elektrische Maschine, die in einem motorischen Betrieb zum Antreiben des Kraftfahrzeugs betrieben wird, und eine zweite elektrische Maschine aufweist, die in einem generatorischen Betrieb betrieben wird. Außerdem betrifft die Erfindung ein Getriebe, bei dem ein solches Verfahren ausgeübt wird.

Aus dem Stand der Technik ist eine Vielzahl von Getrieben bekannt, die in Kraftfahrzeugen eingebaut sind und mittels denen ein serieller Fahrbetrieb des Kraftfahrzeugs realisiert werden kann. So offenbart EP 1 610 038 B1 ein Doppelkupplungsgetriebe mit einer Doppelkupplung und zwei elektrischen Maschinen. Das Doppelkupplungsgetriebe ist derart ausgebildet, dass ein serieller Fahrbetrieb des Kraftfahrzeugs realisierbar ist. Zum Realisieren des seriellen Fahrbetriebs wird eine elektrische Maschine motorisch betrieben, um das Kraftfahrzeug anzutreiben, während die andere elektrische Maschine generatorisch betrieben wird, um die notwendige elektrische Energie zu liefern. DE 10 2006 036 758 A1 offenbart ein Doppelkupplungsgetriebe mit formschlüssiger Doppelkupplung und zwei elektrischen Maschinen. Weiterhin ist aus der WO 2016/199227 A1 ein Hybridfahrzeug mit einer Modusübergangsteuervorrichtung bekannt, die verhindert, dass ein zweites Stromerzeugungssystem während der Fahrt in einem Serien-HEV-Modus überhitzt. Ferner offenbart die US 2017/137016 A1 ein Motorsteuerverfahren, welches das Reduzieren der ersten von einem ersten Motor erzeugten Leistung und das Betreiben eines zweiten Motors umfasst, um eine zweite Leistung zu erzeugen, die der reduzierten ersten Leistung entspricht, wenn eine Temperatur des ersten Motors größer als eine erste Temperatur ist.

Ein Nachteil der aus dem Stand der Technik bekannten Getriebe ist, dass bei einem seriellen Fahrbetrieb mit einer langsamen Fahrgeschwindigkeit und hohem Fahrwiderstand, wie beispielsweise bei einem Berganstieg, die zum Antrieb des Kraftfahrzeugs verwendete elektrische Maschine thermisch stark belastet wird. Somit kann ein serieller Fahrbetrieb nur für eine begrenzte Zeit aufrechterhalten werden, weil die elektrische Maschine ansonsten überhitzen würde. Die andere elektrische Maschine, welche im generatorischen Betrieb betrieben wird, wird thermisch nicht überlastet, weil die Drehzahl der anderen elektrischen Maschine nicht an die Fahrgeschwindigkeit, sondern an die Verbrennungsmotordrehzahl gekoppelt ist.

Die Aufgabe der Erfindung besteht somit darin, ein Verfahren anzugeben, mittels dem ein serieller Fahrbetrieb über einen längeren Zeitraum und bei einem hohen Fahrwiderstand realisiert werden kann.

Die Aufgabe wird durch ein Verfahren der eingangs genannten Art gelöst, das dadurch gekennzeichnet ist, dass nach einem Erzeugen eines Umschaltsignals die erste elektrische Maschine von dem motorischen Betrieb in den generatorischen Betrieb umgeschaltet wird und die zweite elektrische Maschine von dem generatorischen Betrieb in den motorischen Betrieb zum Antreiben des Kraftfahrzeugs umgeschaltet wird.

Erfindungsgemäß wurde erkannt, dass ein serieller Fahrbetrieb in Vorwärts- oder Rückwärtsrichtung bei einem hohen Fahrwiderstand über einen längeren Zeitraum realisiert werden kann, wenn die Funktionen der beiden elektrischen Maschinen vertauscht werden, bevor eine elektrische Maschine zu warm wird. Dies bedeutet, dass die elektrischen Maschinen wechselweise zum Antreiben des Kraftfahrzeugs eingesetzt werden. Somit kann verhindert werden, dass der serielle Fahrbetrieb unterbrochen wird, weil die im motorischen Betrieb betriebene elektrische Maschine zu warm wird. Ein weiterer Vorteil besteht darin, dass beide elektrische Maschinen gleichmäßig belastet werden, was sich vorteilhaft auf die Lebensdauer der elektrischen Maschinen auswirkt.

Als serieller Fahrbetrieb eines Kraftfahrzeugs wird ein Fahrbetrieb verstanden, bei dem eine der beiden elektrischen Maschinen im generatorischen Betrieb betrieben und durch eine Antriebseinheit, wie beispielsweise einen Verbrennungsmotor, angetrieben wird und somit und die andere der beiden elektrischen Maschinen zum Antreiben des Kraftfahrzeugs dient, also im motorischen Betrieb betrieben wird. Beim seriellen Fahrbetrieb weist das Kraftfahrzeug üblicherweise eine geringe Fahrgeschwindigkeit auf.

Die elektrische Maschine besteht zumindest aus einem Stator und einem drehbar gelagerten Rotor und ist in dem motorischen Betrieb dazu eingerichtet, elektrische Energie in mechanische Energie in Form von Drehzahl und Drehmoment zu wandeln, sowie in einem generatorischen Betrieb mechanische Energie in elektrische Energie in Form von Strom und Spannung zu wandeln.

Bei einer besonderen Ausführung kann das Umschaltsignal erzeugt werden, wenn eine Temperatur der ersten elektrischen Maschine einen Schwellwert überschreitet oder wenn eine Temperatur der ersten elektrischen Maschine den Schwellwert überschreitet und eine Temperatur der zweiten elektrischen Maschine, insbesondere gleichzeitig, einen anderen Schwellwert unterschreitet. Eine derartige Erzeugung des Umschaltsignals bietet den Vorteil, dass die Umschaltung nur dann erfolgt, wenn sie unbedingt notwendig ist und somit so selten wie möglich. Dabei weist der Schwellwert einen größeren Wert auf als der andere Schwellwert. Der Schwellwert und/oder der andere Schwellwert können vorgegebenen sein und/oder in einem elektrischen Speicher hinterlegt sein.

Alternativ oder zusätzlich kann das Umschaltsignal erzeugt werden, wenn eine Differenz zwischen der Temperatur der ersten elektrischen Maschine und der Temperatur der zweiten elektrischen Maschine einen weiteren Schwellwert überschreitet. Eine derartige Erzeugung des Umschaltsignals bietet den Vorteil, dass beide elektrischen Maschinen bezüglich ihrer Temperatur unterhalb des Schwellwerts betrieben werden. Der weitere Schwellwert kann vorgegeben und/oder in dem elektrischen Speicher hinterlegt sein.

Die Temperatur der ersten elektrischen Maschine und der zweiten elektrischen Maschine kann jeweils durch einen Sensor oder mehrere Sensoren gemessen werden. Durch die Abhängigkeit des Umschaltsignals von der Temperatur der ersten elektrischen Maschine und/oder von der Temperatur der zweiten elektrischen Maschine kann auf einfache Weise verhindert werden, dass beim seriellen Fahrbetrieb die erste elektrische Maschine und/oder die zweite elektrische Maschine überhitzt.

Bei einer besonderen Ausführung kann die erste elektrische Maschine von dem motorischen Betrieb in den generatorischen Betrieb ohne Zugkraftunterbrechung umgeschaltet werden. Darüber hinaus kann die zweite elektrische Maschine von dem generatorischen Betrieb in den motorischen Betrieb ohne Zugkraftunterbrechung umgeschaltet werden. Ein derartiger Umschaltvorgang bietet sich aus Komfortgründen an. Insbesondere kann die Umschaltung erfolgen, ohne dass die Fahrzeuginsassen diese bemerken.

Das Kraftfahrzeug kann einen elektrischen Energiespeicher, wie beispielsweise eine elektrische Batterie, aufweisen. Der elektrische Energiespeicher kann durch die im generatorischen Betrieb betriebene erste elektrische Maschine oder durch die im generatorischen Betrieb betriebene zweite elektrische Maschine aufgeladen werden. Dadurch kann während des seriellen Fahrbetriebs ein Aufladen des elektrischen Energiespeichers auf einfache Weise erfolgen. Dies führt dazu, dass der elektrische Energiespeicher kleiner dimensioniert werden kann als elektrische Energiespeicher, die nicht mittels einer im generatorischen Betrieb betriebenen elektrischen Maschine aufgeladen werden.

Beim seriellen Fahrbetrieb kann wahlweise die erste elektrische Maschine im motorischen Betrieb und die zweite elektrische Maschine im generatorischen Betrieb oder die erste elektrische Maschine im generatorischen Betrieb und die zweite elektrische Maschine im motorischen Betrieb betrieben werden. Somit ist jederzeit sichergestellt, dass eine elektrische Maschine zum Antreiben des Kraftfahrzeugs dient und die andere elektrische Maschine zum Aufladen des elektrischen Energiespeichers eingesetzt wird.

Bei einer besonderen Ausführung können zum Umschalten der zweiten elektrischen Maschine von dem generatorischen Betrieb in den motorischen Betrieb folgende Schritte in nachfolgend genannter Reihenfolge durchgeführt werden.
a. Durchführen eines Lastabbaus an einem Verbrennungsmotor und der zweiten elektrischen Maschine, um eine Kupplung des Getriebes lastfrei zu stellen,
b. Öffnen der Kupplung,
c. Synchronisieren eines ersten Schaltelements des Getriebes,
d. Schließen des ersten Schaltelements, so dass eine triebtechnische Verbindung zwischen der zweiten elektrischen Maschine und einem Achsdifferential besteht,
e. Durchführen eines Lastabbaus an der ersten elektrischen Maschine und eines Lastaufbaus an der zweiten elektrischen Maschine, um ein zweites Schaltelement des Getriebes lastfrei zu stellen,
f. Öffnen des zweiten Schaltelements,
g. Synchronisieren von einer anderen Kupplung,
h. Schließen der anderen Kupplung, so dass eine triebtechnische Verbindung zwischen dem Verbrennungsmotor und der ersten elektrischen Maschine besteht,
i. Durchführen eines Lastaufbaus an dem Verbrennungsmotor und der ersten elektrischen Maschine, wobei die erste elektrische Maschine in einem generatorischen Betrieb betrieben wird.

Der Lastabbau an dem Verbrennungsmotor und der zweiten elektrischen Maschine können gleichzeitig erfolgen. Nach erfolgtem Lastabbau muss der elektrische Energiespeicher die Versorgung der im motorischen Betrieb betriebenen ersten elektrischen Maschine mit elektrischer Energie übernehmen. Durch den Lastabbau an der zweiten elektrischen Maschine wird auf einfache Weise verhindert, dass der Verbrennungsmotor durch die zweite elektrische Maschine abgewürgt wird.

Das erste Schaltelement wird derart synchronisiert, dass eine Drehzahl eines Schaltelementbestandteils mit einer Drehzahl eines anderen Schaltelementbestandteils übereinstimmt, so dass im nächsten Schritt das erste Schaltelement geschlossen werden kann und somit die beiden Schaltelementbestandteile drehfest miteinander verbunden sind. Insbesondere kann die Drehzahl eines mit der zweiten elektrischen Maschine triebtechnisch verbundenen Zahnrads an die Drehzahl einer ein Abtriebszahnrad aufweisenden Vorgelegewelle angepasst werden.

Der Lastabbau an der ersten elektrischen Maschine und der Lastaufbau an der zweiten elektrischen Maschine können gleichzeitig durchgeführt werden. Dadurch kann auf einfache Weise sichergestellt werden, dass das Antriebsdrehmoment konstant bleibt und/oder das Umschalten ohne Zugkraftunterbrechung erfolgt. Insbesondere kann ausschließlich die im motorischen Betrieb betriebene zweite elektrische Maschine zum Antreiben des Kraftfahrzeugs dienen.

Der Lastaufbau an dem Verbrennungsmotor und der ersten elektrischen Maschine kann gleichzeitig durchgeführt werden. Nach erfolgtem Lastabbau wird der elektrische Energiespeicher entlastet. Insbesondere wird ab diesem Schritt der elektrische Energiespeicher durch die im generatorischen Betrieb betriebene erste elektrische Maschine aufgeladen.

Bei einer besonderen Ausführung kann nach dem Erzeugen eines weiteren Umschaltsignals die erste elektrische Maschine in dem motorischen Betrieb betrieben werden und die zweite elektrische Maschine kann in dem generatorischen Betrieb betrieben werden. Im Ergebnis kann abwechselnd die erste elektrische Maschine oder die zweite elektrische Maschine in dem motorischen Betrieb betrieben werden. Dadurch wird ein serieller Fahrbetrieb mit hohem Fahrwiderstand über einen längeren Zeitraum möglich, ohne dass die Gefahr besteht, dass die erste elektrische Maschine oder die zweite elektrische Maschine überhitzt.

Das weitere Umschaltsignal kann erzeugt werden, wenn die Temperatur der zweiten elektrischen Maschine einen Schwellenwert überschreitet oder wenn die Temperatur der zweiten elektrischen Maschine einen Schwellwert überschreitet und eine Temperatur der ersten elektrischen Maschine, insbesondere gleichzeitig, einen anderen Schwellwert unterschreitet. Dabei weist der Schwellwert einen größeren Wert auf, als der andere Schwellwert. Alternativ oder zusätzlich kann das Umschaltsignal erzeugt werden, wenn eine Differenz zwischen der Temperatur der zweiten elektrischen Maschine und der Temperatur der ersten elektrischen Maschine einen weiteren Schwellwert überschreitet.

Darüber hinaus kann das Umschaltsignal erst dann erzeugt werden, wenn festgestellt wird, dass der elektrische Energiespeicher derart aufgeladen ist, dass ausreichend elektrische Energie für die Umschaltung zur Verfügung steht. Insbesondere kann geprüft werden, ob genügend Kapazität für die Umschaltung zur Verfügung steht. Der serielle Fahrbetrieb kann genutzt werden, um den elektrischen Energiespeicher soweit aufzuladen, dass für den Umschaltvorgang genügend elektrische Energie zur Verfügung steht. Die für den Umschaltvorgang benötigte Energiemenge ist nicht hoch, weil der Umschaltvorgang kurz ist und beispielsweise zwei Sekunden dauert.

Zum Umschalten der ersten elektrischen Maschine von dem generatorischen Betrieb in den motorischen Betrieb können folgende Schritte in nachfolgend genannter Reihenfolge durchgeführt werden:
a. Durchführen eines Lastabbaus an einem Verbrennungsmotor und der ersten elektrischen Maschine, um eine andere Kupplung des Getriebes lastfrei zu stellen,
b. Öffnen der anderen Kupplung,
c. Synchronisieren eines zweiten Schaltelements des Getriebes,
d. Schließen des zweiten Schaltelements, so dass eine triebtechnische Verbindung zwischen der ersten elektrischen Maschine und einem Achsdifferential besteht,
e. Durchführen eines Lastabbaus an der zweiten elektrischen Maschine und eines Lastaufbaus an der ersten elektrischen Maschine, um ein erstes Schaltelement des Getriebes lastfrei zu stellen,
f. Öffnen des ersten Schaltelements,
g. Synchronisieren einer Kupplung,
h. Schließen der Kupplung, so dass eine triebtechnische Verbindung zwischen dem Verbrennungsmotor und der zweiten elektrischen Maschine besteht,
i. Durchführen eines Lastaufbaus an dem Verbrennungsmotor und der zweiten elektrischen Maschine, wobei die zweite elektrische Maschine im generatorischen Betrieb betrieben wird.

Der Lastabbau an dem Verbrennungsmotor und der ersten elektrischen Maschine können gleichzeitig erfolgen. Nach erfolgtem Lastabbau muss der elektrische Energiespeicher die Versorgung der zweiten elektrischen Maschine mit elektrischer Energie übernehmen. Durch den erfolgten Lastabbau an der ersten elektrischen Maschine wird auf einfache Weise verhindert, dass der Verbrennungsmotor durch die erste elektrische Maschine abgewürgt wird.

Das zweite Schaltelement wird derart synchronisiert, dass eine Drehzahl eines Schaltelementbestandteils mit einer Drehzahl eines anderen Schaltelementbestandteils übereinstimmt, so dass im nächsten Schritt das zweite Schaltelement geschlossen werden kann und somit die beiden Schaltelementbestandteile miteinander drehfest verbunden sind. Insbesondere kann die Drehzahl eines mit der ersten elektrischen Maschine triebtechnisch verbundenen Zahnrads an die Drehzahl der Vorgelegewelle angepasst werden.

Der Lastabbau an der zweiten elektrischen Maschine und der Lastaufbau an der ersten elektrischen Maschine können gleichzeitig durchgeführt werden. Dadurch kann auf einfache Weise sichergestellt werden, dass das Antriebsdrehmoment konstant bleibt und/oder das Umschalten ohne Zugkraftunterbrechung erfolgt. Insbesondere kann ausschließlich die im motorischen Betrieb betriebene erste elektrische Maschine zum Antreiben des Kraftfahrzeugs dienen.

Der Lastaufbau an dem Verbrennungsmotor und der zweiten elektrischen Maschine kann gleichzeitig durchgeführt werden. Nach erfolgtem Lastabbau wird der elektrische Energiespeicher entlastet. Insbesondere wird ab diesem Schritt der elektrische Energiespeicher durch die im generatorischen Betrieb betriebene zweite elektrische Maschine aufgeladen.

Die Kupplung und die andere Kupplung dienen jeweils zum triebtechnischen Verbinden des Getriebes mit der Kraftfahrzeugantriebseinheit, wie dem Verbrennungsmotor. Insbesondere kann während der oben beschriebenen Schritte c bis h der Verbrennungsmotor in einem Leerlauf betrieben werden. Ein Abschalten des Verbrennungsmotors lohnt sich nicht, weil die Umschaltung in einem kurzen Zeitraum durchgeführt werden kann.

Die erste elektrische Maschine kann mittels der anderen Kupplung mit dem Verbrennungsmotor triebtechnisch verbindbar sein. Darüber hinaus kann die zweite elektrische Maschine mittels der Kupplung mit dem Verbrennungsmotor triebtechnisch verbindbar sein.

Dabei kann das zweite Schaltelement mittels einer Drehzahlregelung der ersten elektrischen Maschine synchronisiert werden. Dazu wird ein Schaltelementbestandteil des zweiten Schaltelements mittels der ersten elektrischen Maschine auf die gewünschte Drehzahl gebracht. Das erste Schaltelement kann mittels einer Drehzahlregelung der zweiten elektrischen Maschine synchronisiert werden. Dazu wird ein Schaltelementbestandteil des ersten Schaltelements mittels der zweiten elektrischen Maschine auf die gewünschte Drehzahl gebracht.

Bei den oben beschriebenen Schritten b bis h wird die im motorischen Betrieb betriebene erste elektrische Maschine oder die im motorischen Betrieb betriebene zweite elektrische Maschine mit elektrischer Energie aus dem elektrischen Energiespeicher versorgt. Mittels einer Betriebsstrategie wird sichergestellt, dass der elektrische Energiespeicher vor einem Umschalten ausreichend elektrische Energie aufweist, um die jeweilige im motorisch betriebene elektrische Maschine während des Umschaltvorgangs mit elektrischer Energie zu versorgen.

Von besonderem Vorteil ist ein Getriebe, bei dem ein erfindungsgemäßes Verfahren ausgeführt wird. Das Getriebe kann ein Automatgetriebe sein, das mehrere Gänge aufweist. Dabei kann das Getriebe wenigstens vier, insbesondere genau vier, Gänge für einen seriellen Fahrbetrieb aufweisen. Ein erster Gang kann durch Schließen des zweiten Schaltelements realisiert werden, wobei die restlichen Schaltelemente geöffnet sind. Zum Realisieren des ersten Gangs ist zusätzlich die andere Kupplung geschlossen und die Kupplung geöffnet. Darüber hinaus kann durch Schließen des ersten Schaltelements ein zweiter Gang realisiert werden, wobei die restlichen Schaltelemente geöffnet sind. Zum Realisieren des zweiten Gangs ist zusätzlich die Kupplung geschlossen und die andere Kupplung geöffnet. Die einzelnen Gänge unterscheiden sich in ihrer Übersetzung zwischen einer ersten bzw. zweiten Getriebeeingangswelle und einem Getriebeausgangsbauteil, wie dem zuvor erwähnten Abtriebszahnrad, voneinander. Beim erfindungsgemäßen Verfahren kann beim Umschaltvorgang abwechselnd zwischen dem ersten Gang und dem zweiten Gang gewechselt werden.

Unter einer Welle ist nicht ausschließlich ein beispielsweise zylindrisches, drehbar gelagertes Maschinenelement zur Übertragung von Drehmomenten zu verstehen, sondern vielmehr sind hierunter auch allgemeine Verbindungselemente zu verstehen, die einzelne Bauteile oder Elemente miteinander verbinden, insbesondere Verbindungselemente, die mehrere Elemente drehfest miteinander verbinden.

Das Getriebe kann auch derart ausgebildet sein, dass ein rein elektrischer Fahrbetrieb möglich ist. Zum Realisieren des rein elektrischen Fahrbetriebs wird die Kupplung und/oder die andere Kupplung nicht geschlossen, während hingegen wenigstens ein Schaltelement, insbesondere genau ein, Schaltelement geschlossen wird. Der Antrieb des Kraftfahrzeugs erfolgt mittels der ersten elektrischen Maschine und/oder der zweiten elektrischen Maschine.

Das Getriebe kann als Doppelkupplungsgetriebe ausgebildet sein. Bei diesem Fall bilden die Kupplung und die andere Kupplung eine Doppelkupplung. Dabei kann die Doppelkupplung eine formschlüssige oder eine reibschlüssige Doppelkupplung sein. Das Getriebe kann auch derart ausgebildet sein, dass es sich für einen Front-Quereinbau eignet.

Darüber hinaus kann das Getriebe wenigstens zwei, insbesondere genau zwei, Teilgetriebe aufweisen. Dabei ist ein erstes Teilgetriebe mit der ersten elektrischen Maschine stets triebtechnisch verbunden. Ein zweites Teilgetriebe ist mit der zweiten elektrischen Maschine stets triebtechnisch verbunden. Jedes der Teilgetriebe kann eine oder mehrere Radebenen aufweisen. Die Anbindung der elektrischen Maschine an die jeweiligen Teilgetriebe kann einstufig oder mehrstufig erfolgen. Dabei kann die Anbindung als Stirnradanbindung ausgeführt sein. Dabei kann die Anbindung derart erfolgen, dass die Vorübersetzungen der ersten elektrischen Maschine und der zweiten elektrischen Maschine unterschiedlich sind.

Die Kraftfahrzeugantriebseinheit ist mittels der anderen Kupplung mit dem ersten Teilgetriebe triebtechnisch verbindbar und mittels der Kupplung mit dem zweiten Teilgetriebe triebtechnisch verbindbar. Zum Realisieren eines Gangs wird jeweils eines der Teilgetriebe mit dem Getriebeausgangsbauteil triebtechnisch verbunden. Dabei werden benachbarte Gänge durch abwechselndes triebtechnisches Verbinden des ersten Teilgetriebes und des zweiten Teilgetriebes mit dem Getriebeausgangsbauteil realisiert. Dem ersten Teilgetriebe können der erste und ein dritter Gang zugeordnet sein. Dem zweiten Teilgetriebe können ein zweiter und ein vierter Gang zugeordnet sein. Von besonderem Vorteil ist der Einsatz des erfindungsgemäßen Getriebes in einem Kraftfahrzeug.

In der Figur ist der Erfindungsgegenstand schematisch dargestellt und wird nachfolgend beschrieben. Dabei zeigt:

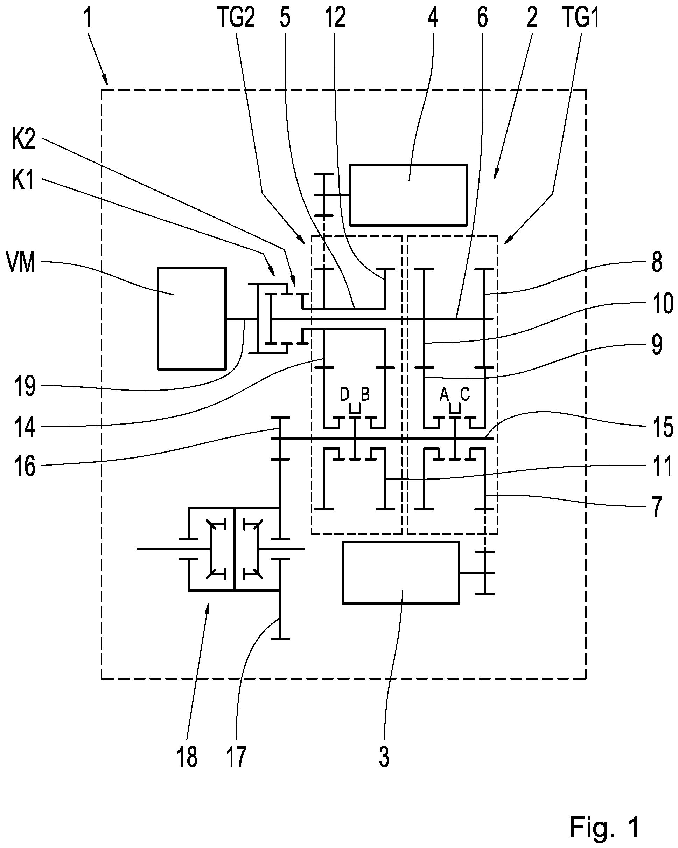

- Figur 1: eine Darstellung eines Getriebes, bei dem das erfindungsgemäße Verfahren ausgeführt werden kann.

Das in Figur 1 gezeigte Getriebe 2 ist in einem in Figur 1 nicht näher dargestellten Kraftfahrzeug 1 eingebaut. Das Getriebe 2 weist eine Kraftfahrzeugantriebseinheit, wie beispielsweise einen Verbrennungsmotor VM, eine erste elektrische Maschine 3 und eine zweite elektrische Maschine 4 auf. Darüber hinaus weist das Getriebe 2 ein erstes Teilgetriebe TG1 und ein zweites Teilgetriebe TG2 auf. Beide Teilgetriebe weisen jeweils zwei Radebenen auf. Dabei ist das erste Teilgetriebe TG1 mit der ersten elektrischen Maschine 3 stets triebtechnisch verbunden und das zweite Teilgetriebe TG2 ist mit der zweiten elektrischen Maschine 4 stets triebtechnisch verbunden.

Das Getriebe 2 weist eine Kupplung K2 und eine andere Kupplung K1 auf. Darüber hinaus weist das Getriebe 2 ein erstes Schaltelement B, ein zweites Schaltelement A, ein drittes Schaltelement D und ein viertes Schaltelement C auf. Das erste Schaltelement B und das dritte Schaltelement D sind als Doppelschaltelement ausgeführt. Das zweite Schaltelement A und das vierte Schaltelement C sind ebenfalls als Doppelschaltelement ausgeführt. Die andere Kupplung K1 und die Kupplung K2 sind als Doppelkupplung ausgeführt.

Eine Abtriebswelle 19 des Verbrennungsmotors VM ist mittels der anderen Kupplung K1 mit einer ersten Getriebeeingangswelle 6 drehfest verbindbar. Darüber hinaus ist die Abtriebswelle 19 mittels der Kupplung K2 mit einer zweiten Getriebeeingangswelle 5 drehfest verbindbar. Die zweite Getriebeeingangswelle 5 ist koaxial zu der ersten Getriebeeingangswelle 6 angeordnet und umschließt diese teilweise.

Das erste Teilgetriebe TG1 weist zwei Radebenen auf, in denen jeweils ein Zahnradpaar angeordnet sind. So weist ein in einer ersten Radebene angeordnetes Zahnradpaar ein erstes Zahnrad 7 und ein zweites Zahnrad 8 auf, die miteinander in Eingriff stehen. Ein in einer zweiten Radebene angeordnetes zweites Zahnradpaar weist ein drittes Zahnrad 9 und ein viertes Zahnrad 10 auf, die miteinander in Eingriff stehen. Das zweite Zahnrad 8 und das vierte Zahnrad 10 sind mit der ersten Getriebeeingangswelle 6 jeweils drehfest verbunden. Die erste elektrische Maschine 3 ist mittels eines Zugmittels in Form von beispielsweise einer Kette mit dem ersten Zahnrad 7 stets triebtechnisch verbunden.

Das zweite Teilgetriebe TG2 weist zwei andere Radebenen auf, in denen jeweils ein anderes Zahnradpaar angeordnet ist. So weist ein in einer ersten Radebene angeordnetes erstes anderes Zahnradpaar ein erstes anderes Zahnrad 11 und ein zweites anderes Zahnrad 12 auf, die miteinander in Eingriff stehen. Ein in einer zweiten anderen Radebene angeordnetes zweites anderes Zahnradpaar weist ein drittes anderes Zahnrad 13 und ein viertes anderes Zahnrad 14 auf, die miteinander in Eingriff stehen. Das zweite andere Zahnrad 12 und das vierte andere Zahnrad 14 sind mit der zweiten Getriebeeingangswelle 5 jeweils drehfest verbunden.

Die zweite elektrische Maschine 4 ist mittels eines Zugmittels in Form von beispielsweise einer Kette mit dem vierten anderen Zahnrad 14 stets triebtechnisch verbunden. Die erste und zweite elektrische Maschine 3, 4 sind achsversetzt und/oder achsparallel zu der ersten und/oder zweiten Getriebeeingangswelle 6, 5 angeordnet.

Das Getriebe 2 weist eine Vorgelegewelle 15 auf. Die Vorgelegewelle 15 weist als Getriebeausgangsbauteil ein Abtriebszahnrad 16 auf, das mit einem Zahnrad 17 eines Achsdifferentials 18 in Eingriff ist. Das Achsdifferential 18 ist mit in der Figur nicht dargestellten Fahrzeugrädern triebtechnisch verbunden. Dabei verlaufen Radwellen des Achsdifferentials 18 parallel zu der ersten und zweiten Getriebeeingangswelle 6, 5.

Das erste Zahnrad 7 ist mittels des vierten Schaltelements C mit der Vorgelegewelle 15 drehfest verbindbar. Das dritte Zahnrad 9 ist mittels des zweiten Schaltelements A mit der Vorgelegewelle 15 drehfest verbindbar. Das erste andere Zahnrad 11 ist mittels des ersten Schaltelements B mit der Vorgelegewelle 15 drehfest verbindbar. Das dritte andere Zahnrad 13 ist mittels des dritten Schaltelements D mit der Vorgelegewelle 15 drehfest verbindbar.

Mit dem Getriebe 2 ist ein rein elektrischer Fahrbetrieb mittels beispielsweise der ersten elektrischen Maschine 3 möglich. Beim rein elektrischen Fahrbetrieb ist das zweite Schaltelement A oder das vierte Schaltelement C geschlossen und die beiden Kupplungen K1, K2 sind geöffnet. Dabei wird beim geschlossenen zweiten Schaltelement A ein erster Gang und beim geschlossenen vierten Schaltelement C ein dritter Gang realisiert. Darüber hinaus ist mittels des Getriebes 2 ein rein elektrischer Fahrbetrieb mittels der zweiten elektrischen Maschine 4 möglich. Beim rein elektrischen Fahrbetrieb mittels der zweiten elektrischen Maschine 4 ist das erste Schaltelement B oder das dritte Schaltelement D geschlossen und die beiden Kupplungen K1, K2 sind geöffnet. Dabei wird beim geschlossenen ersten Schaltelement B ein zweiter Gang und beim geschlossenen dritten Schaltelement D ein vierter Gang realisiert.

Beim seriellen Fahrbetrieb sind das zweite Schaltelement A und die Kupplung K2 geschlossen und die restlichen Schaltelemente und die andere Kupplung K1 sind geöffnet. Bei diesem Schaltzustand dient die erste elektrische Maschine 3 zum Antreiben des Kraftfahrzeugs 1 und die zweite elektrische Maschine 4 wird im generatorischen Betrieb betrieben. Das zweite Schaltelement A ist geschlossen, weil beim seriellen Fahrbetrieb eine geringe Fahrgeschwindigkeit vorliegt und daher der erste Gang besser geeignet ist als der bei einem geschlossenen vierten Schaltelement C resultierende dritte Gang.

Sobald ermittelt wird, dass beispielsweise die Temperatur der ersten elektrischen Maschine 3 einen Schwellwert überschreitet, erfolgt der oben beschriebene Umschaltvorgang. Nach dem Umschaltvorgang sind das erste Schaltelement B und die andere Kupplung K1 geschlossen und die restlichen Schaltelemente und die Kupplung K2 sind geöffnet. Auch bei diesem Schaltzustand ist ein serieller Fahrbetrieb möglich, wobei die erste elektrische Maschine 3 als Generator und die zweite elektrische Maschine 4 zum Antreiben des Kraftfahrzeugs 1 dient. Das erste Schaltelement B ist geschlossen, weil bei einer geringen Fahrgeschwindigkeit der zweite Gang besser geeignet ist als der bei einem geschlossenen dritten Schaltelement D resultierende vierte Gang.

### Bezugszeichen

- 1: Kraftfahrzeug
- 2: Getriebe
- 3: erste elektrische Maschine
- 4: zweite elektrische Maschine
- 5: zweite Getriebeeingangswelle
- 6: erste Getriebeeingangswelle
- 7: erstes Zahnrad
- 8: zweites Zahnrad
- 9: drittes Zahnrad
- 10: viertes Zahnrad
- 11: erstes anderes Zahnrad
- 12: zweites anderes Zahnrad
- 13: drittes anderes Zahnrad
- 14: viertes anderes Zahnrad
- 15: Vorgelegewelle
- 16: Abtriebszahnrad
- 17: Zahnrad
- 18: Achsdifferential
- 19: Abtriebswelle
- A: zweites Schaltelement
- B: erstes Schaltelement
- C: viertes Schaltelement
- D: drittes Schaltelement
- K1: andere Kupplung
- K2: Kupplung
- VM: Verbrennungsmotor
- TG1: erstes Teilgetriebe
- TG2: zweites Teilgetriebe

## Patentansprüche

1. Verfahren bei einem seriellen Fahrbetrieb eines Kraftfahrzeugs (1) mit einem Getriebe (2), das eine erste elektrische Maschine (3), die in einem motorischen Betrieb zum Antreiben des Kraftfahrzeugs (1) betrieben wird, und eine zweite elektrische Maschine (4) aufweist, die in einem generatorischen Betrieb betrieben wird, **dadurch gekennzeichnet, dass** nach einem Erzeugen eines Umschaltsignals die erste elektrische Maschine (3) von dem motorischen Betrieb in den generatorischen Betrieb umgeschaltet wird und die zweite elektrische Maschine (4) von dem generatorischen Betrieb in den motorischen Betrieb zum Antreiben des Kraftfahrzeugs (1) umgeschaltet wird.

2. Verfahren nach Anspruch 1, **dadurch gekennzeichnet, dass** das Umschaltsignal erzeugt wird, wenn
a. eine Temperatur der ersten elektrischen Maschine (3) einen Schwellwert überschreitet oder wenn
b. eine Temperatur der ersten elektrischen Maschine (3) einen Schwellwert überschreitet und eine Temperatur der zweiten elektrischen Maschine (4) einen anderen Schwellwert unterschreitet.

3. Verfahren nach Anspruch 1 oder 2, **dadurch gekennzeichnet, dass** das Umschaltsignal erzeugt wird, wenn eine Differenz zwischen einer Temperatur der ersten elektrischen Maschine (3) und einer Temperatur der zweiten elektrischen Maschine (4) einen weiteren Schwellwert überschreitet.

4. Verfahren nach einem der Ansprüche 1 bis 3, wobei das Getriebe eine Doppelkupplung (K1, K2) umfasst, **dadurch gekennzeichnet, dass**
a. die erste elektrische Maschine (3) mittels der Doppelkupplung (K1, K2) von dem motorischen Betrieb in den generatorischen Betrieb ohne Zugkraftunterbrechung umgeschaltet wird und/oder dass
b. die zweite elektrische Maschine (4) mittels der Doppelkupplung (K1, K2) von dem generatorischen Betrieb in den motorischen Betrieb ohne Zugkraftunterbrechung umgeschaltet wird.

5. Verfahren nach einem der Ansprüche 1 bis 4, **dadurch gekennzeichnet, dass**
a. ein elektrischer Energiespeicher durch die im generatorischen Betrieb betriebene erste elektrische Maschine (3) oder durch die im generatorischen Betrieb betriebene zweite elektrischer Maschine (4) aufgeladen wird und/oder dass
b. wahlweise die erste elektrische Maschine (3) im motorischen Betrieb und die zweite elektrische Maschine (4) im generatorischen Betrieb oder die erste elektrische Maschine (3) im generatorischen Betrieb und die zweite elektrische Maschine (4) im motorischen Betrieb betrieben wird.

6. Verfahren nach einem der Ansprüche 1 bis 5, **dadurch gekennzeichnet, dass** zum Umschalten der zweiten elektrischen Maschine (4) von dem generatorischen Betrieb in den motorischen Betrieb folgende Schritte in nachfolgend genannter Reihenfolge durchgeführt werden:
a. Durchführen eines Lastabbaus an einem Verbrennungsmotor (VM) und der zweiten elektrischen Maschine (4), um eine Kupplung (K2) des Getriebes (2) lastfrei zu stellen,
b. Öffnen der Kupplung (K2),
c. Synchronisieren eines ersten Schaltelements (B) des Getriebes (2),
d. Schließen des ersten Schaltelements (B), so dass eine triebtechnische Verbindung zwischen der zweiten elektrischen Maschine (4) und einem Achsdifferential (18) besteht,
e. Durchführen eines Lastabbaus an der ersten elektrischen Maschine (3) und eines Lastaufbaus an der zweiten elektrischen Maschine (4), um ein zweites Schaltelement (A) des Getriebes (2) lastfrei zu stellen,
f. Öffnen des zweiten Schaltelements (A),
g. Synchronisieren von einer anderen Kupplung (K1),
h. Schließen der anderen Kupplung (K1), so dass eine triebtechnische Verbindung zwischen dem Verbrennungsmotor (VM) und der ersten elektrischen Maschine (3) besteht,
i. Durchführen eines Lastaufbaus an dem Verbrennungsmotor (VM) und der ersten elektrischen Maschine (3), wobei die erste elektrische Maschine (3) in einem generatorischen Betrieb betrieben wird.

7. Verfahren nach einem der Ansprüche 1 bis 6, **dadurch gekennzeichnet, dass** nach dem Erzeugen eines weiteren Umschaltsignals die erste elektrische Maschine (3) in dem motorischen Betrieb betrieben wird und die zweite elektrische Maschine (4) in dem generatorischen Betrieb betrieben wird.

8. Verfahren nach Anspruch 7, **dadurch gekennzeichnet, dass** das weitere Umschaltsignal erzeugt wird, wenn
a. eine Temperatur der zweiten elektrischen Maschine (4) einen Schwellwert überschreitet oder wenn
b. eine Temperatur der zweiten elektrischen Maschine (4) einen Schwellwert überschreitet und eine Temperatur der ersten elektrischen Maschinen (3) einen anderen Schwellwert unterschreitet.

9. Verfahren nach Anspruch 7 oder 8, **dadurch gekennzeichnet, dass** das weitere Umschaltsignal erzeugt wird, wenn eine Differenz zwischen einer Temperatur der zweiten elektrischen Maschine (4) und einer Temperatur der ersten elektrischen Maschine (3) einen weiteren Schwellwert überschreitet.

10. Verfahren nach einem der Ansprüche 7 bis 9, **dadurch gekennzeichnet, dass** zum Umschalten der ersten elektrischen Maschine (3) von dem generatorischen Betrieb in den motorischen Betrieb folgende Schritte in nachfolgend genannter Reihenfolge durchgeführt werden:
a. Durchführen eines Lastabbaus an einem Verbrennungsmotor (VM) und der ersten elektrischen Maschine (3), um eine andere Kupplung (K1) des Getriebes (2) lastfrei zu stellen,
b. Öffnen der anderen Kupplung (K1),
c. Synchronisieren eines zweiten Schaltelements (A) des Getriebes (2),
d. Schließen des zweiten Schaltelements (A), so dass eine triebtechnische Verbindung zwischen der ersten elektrischen Maschine (3) und einem Achsdifferential (18) besteht,
e. Durchführen eines Lastabbaus an der zweiten elektrischen Maschine (4) und eines Lastaufbaus an der ersten elektrischen Maschine (3), um ein erstes Schaltelement (B) des Getriebes (2) lastfrei zu stellen,
f. Öffnen des ersten Schaltelements (B),
g. Synchronisieren einer Kupplung (K2),
h. Schließen der Kupplung (K2), so dass eine triebtechnische Verbindung zwischen dem Verbrennungsmotor (VM) und der zweiten elektrischen Maschine (4) besteht,
i. Durchführen eines Lastaufbaus an dem Verbrennungsmotor (VM) und der zweiten elektrischen Maschine (4), wobei die zweite elektrische Maschine (4) im generatorischen Betrieb betrieben wird.

11. Verfahren nach Anspruch 6 bis 10, **dadurch gekennzeichnet, dass**
a. der Verbrennungsmotor (VM) während der Schritte c bis h im Leerlauf betrieben wird und/oder dass
b. bei den Schritten b bis h die im motorischen Betrieb betriebene erste elektrische Maschine (3) oder die im motorischen Betrieb betriebene zweite elektrische Maschine (4) mit elektrischer Energie aus einem elektrischen Energiespeicher versorgt wird.

12. Verfahren nach einem der Ansprüche 6 bis 11, **dadurch gekennzeichnet, dass**
a. durch Schließen des ersten Schaltelements (B) ein zweiter Gang realisiert wird und/oder dass
b. durch Schließen des zweiten Schaltelements (A) ein erster Gang realisiert wird.

13. Verfahren nach einem der Ansprüche 6 bis 12 **dadurch gekennzeichnet, dass**
a. das Synchronisieren des zweiten Schaltelements (A) mittels einer Drehzahlregelung der ersten elektrischen Maschine (3) durchgeführt wird und/oder dass
b. das Synchronisieren des ersten Schaltelements (B) mittels einer Drehzahlregelung der zweiten elektrischen Maschine (4) durchgeführt wird.

14. Getriebe (2), das einen Verbrennungsmotor (VM), eine erste elektrische Maschine (3), eine zweite elektrische Maschine (4), eine Kupplung (K2) und eine andere Kupplung (K1) umfasst, wobei das Getriebe derart ausgebildet ist, ein Verfahren nach einem der Ansprüche 1 bis 13 auszuführen.

15. Getriebe (2) nach Anspruch 14, **dadurch gekennzeichnet, dass**
a. die erste elektrische Maschine (3) mittels der anderen Kupplung (K1) mit dem Verbrennungsmotor (VM) triebtechnisch verbindbar ist und/oder dass
b. die zweite elektrische Maschine (4) mittels der Kupplung (K2) mit dem Verbrennungsmotor (VM) triebtechnisch verbindbar ist.

## Claims

1. Method for a serial driving mode of a motor vehicle (1) comprising a gearbox (2) which has a first electric machine (3), which is operated in a motor mode for driving the motor vehicle (1), and a second electric machine (4), which is operated in a generator mode, **characterized in that**, after a switchover signal is generated, the first electric machine (3) is switched over from the motor mode to the generator mode and the second electric machine (4) is switched over from the generator mode to the motor mode in order to drive the motor vehicle (1).

2. Method according to Claim 1, **characterized in that** the switchover signal is generated if
a. a temperature of the first electric machine (3) exceeds a threshold value or if
b. a temperature of the first electric machine (3) exceeds a threshold value and a temperature of the second electric machine (4) falls below another threshold value.

3. Method according to Claim 1 or 2, **characterized in that** the switchover signal is generated if a difference between a temperature of the first electric machine (3) and a temperature of the second electric machine (4) exceeds a further threshold value.

4. Method according to one of Claims 1 to 3, wherein the gearbox comprises a dual clutch (K1, K2), **characterized in that**
a. the first electric machine (3) is switched over from the motor mode to the generator mode by means of the dual clutch (K1, K2) without an interruption in tractive force and/or **in that**
b. the second electric machine (4) is switched over from the generator mode to the motor mode by means of the dual clutch (K1, K2) without an interruption in tractive force.

5. Method according to one of Claims 1 to 4, **characterized in that**
a. an electrical energy store is charged by the first electric machine (3), which is operated in the generator mode, or by the second electric machine (4), which is operated in the generator mode, and/or in that
b. selectively the first electric machine (3) is operated in the motor mode and the second electric machine (4) is operated in the generator mode or the first electric machine (3) is operated in the generator mode and the second electric machine (4) is operated in the motor mode.

6. Method according to one of Claims 1 to 5, **characterized in that**, in order to switch over the second electric machine (4) from the generator mode to the motor mode, the following steps are carried out in the order listed below:
a. carrying out a reduction in load on the internal combustion engine (VM) and the second electric machine (4) in order to set a clutch (K2) of the gearbox (2) to a load-free state,
b. opening the clutch (K2),
c. synchronizing a first shifting element (B) of the gearbox (2),
d. closing the first shifting element (B), so that there is a connection in terms of drive between the second electric machine (4) and an axle differential (18),
e. carrying out a reduction in load on the first electric machine (3) and a build-up in load on the second electric machine (4) in order to set a second shifting element (A) of the gearbox (2) to a load-free state,
f. opening the second shifting element (A),
g. synchronizing another clutch (K1),
h. closing the other clutch (K1), so that there is a connection in terms of drive between the internal combustion engine (VM) and the first electric machine (3),
i. carrying out a build-up in load on the internal combustion engine (VM) and the first electric machine (3), wherein the first electric machine (3) is operated in a generator mode.

7. Method according to one of Claims 1 to 6, **characterized in that**, after a further switchover signal is generated, the first electric machine (3) is operated in the motor mode and the second electric machine (4) is operated in the generator mode.

8. Method according to Claim 7, **characterized in that** the further switchover signal is generated if
a. a temperature of the second electric machine (4) exceeds a threshold value or if
b. a temperature of the second electric machine (4) exceeds a threshold value and a temperature of the first electric machines (3) falls below another threshold value.

9. Method according to Claim 7 or 8, **characterized in that** the further switchover signal is generated if a difference between a temperature of the second electric machine (4) and a temperature of the first electric machine (3) exceeds a further threshold value.

10. Method according to one of Claims 7 to 9, **characterized in that**, in order to switch over the first electric machine (3) from the generator mode to the motor mode, the following steps are carried out in the order listed below:
a. carrying out a reduction in load on an internal combustion engine (VM) and the first electric machine (3) in order to set another clutch (K1) of the gearbox (2) to a load-free state,
b. opening the other clutch (K1),
c. synchronizing a second shifting element (A) of the gearbox (2),
d. closing the second shifting element (A), so that there is a connection in terms of drive between the first electric machine (3) and an axle differential (18),
e. carrying out a reduction in load on the second electric machine (4) and a build-up in load on the first electric machine (3) in order to set a first shifting element (B) of the gearbox (2) to a load-free state,
f. opening the first shifting element (B),
g. synchronizing a clutch (K2),
h. closing the clutch (K2), so that there is a connection in terms of drive between the internal combustion engine (VM) and the second electric machine (4),
i. carrying out a build-up in load on the internal combustion engine (VM) and the second electric machine (4), wherein the second electric machine (4) is operated in the generator mode.

11. Method according to Claims 6 to 10, **characterized in that**
a. the internal combustion engine (VM) is operated in idling mode during steps c to h, and/or **in that**
b. the first electric machine (3), which is operated in the motor mode, or the second electric machine (4), which is operated in the motor mode, is supplied with electrical energy from an electrical energy store in steps b to h.

12. Method according to one of Claims 6 to 11, **characterized in that**
a. a second gear is realized by closing the first shifting element (B), and/or **in that**
b. the first gear is realized by closing the second shifting element (A).

13. Method according to one of Claims 6 to 12, **characterized in that**
a. the synchronization of the second shifting element (A) is carried out by means of rotation speed control of the first electric machine (3), and/or **in that**
b. the synchronization of the first shifting element (B) is carried out by means of rotation speed control of the second electric machine (4).

14. Gearbox (2) which comprises an internal combustion engine (VM), a first electric machine (3), a second electric machine (4), a clutch (K2) and another clutch (K1), wherein the gearbox is designed in such a way as to execute a method according to one of Claims 1 to 13.

15. Gearbox (2) according to Claim 14, **characterized in that**
a. the first electric machine (3) can be connected in terms of drive to the internal combustion engine (VM) by means of the other clutch (K1), and/or **in that**
b. the second electric machine (4) can be connected in terms of drive to the internal combustion engine (VM) by means of the clutch (K2).

## Revendications

1. Procédé pour un mode de conduite en série d'un véhicule automobile (1) pourvu d'une boîte de vitesses (2) qui présente une première machine électrique (3) qui fonctionne en mode moteur pour entraîner le véhicule automobile (1) et une deuxième machine électrique (4) qui fonctionne en mode générateur,
**caractérisé en ce qu'**après la génération d'un signal de commutation, la première machine électrique (3) est commutée du mode moteur au mode générateur, et la deuxième machine électrique (4) est commutée du mode générateur au mode moteur pour entraîner le véhicule automobile (1).

2. Procédé selon la revendication 1, **caractérisé en ce que** le signal de commutation est généré, si a) une température de la première machine électrique (3) dépasse une valeur seuil, ou si b) une température de la première machine électrique (3) dépasse une valeur seuil et une température de la deuxième machine électrique (4) soupasse une autre valeur seuil.

3. Procédé selon la revendication 1 ou 2, **caractérisé en ce que** le signal de commutation est généré si une différence entre une température de la première machine électrique (3) et une température de la deuxième machine électrique (4) dépasse une autre valeur seuil.

4. Procédé selon l'une quelconque des revendications 1 à 3, dans lequel la boîte de vitesses comprend un embrayage double (K1, K2), **caractérisé en ce que**
a) la première machine électrique (3) est commutée au moyen de l'embrayage double (K1, K2) du mode moteur au mode générateur sans interruption de la force de traction, et/ou **en ce que**
b) la deuxième machine électrique (4) est commutée au moyen de l'embrayage double (K1, K2) du mode générateur au mode moteur sans interruption de la force de traction.

5. Procédé selon l'une quelconque des revendications 1 à 4, **caractérisé en ce que**
a) un accumulateur d'énergie électrique est rechargé par la première machine électrique (3) fonctionnant en mode générateur ou par la deuxième machine électrique (4) fonctionnant en mode moteur, et/ou **en ce que**
b) sélectivement la première machine électrique (3) fonctionne en mode moteur et la deuxième machine électrique (4) fonctionne en mode générateur ou la première machine électrique (3) fonctionne en mode générateur et la deuxième machine électrique (4) fonctionne en mode moteur.

6. Procédé selon l'une quelconque des revendications 1 à 5, **caractérisé en ce que** pour la commutation de la deuxième machine électrique (4) du mode générateur au mode moteur, les étapes suivantes sont exécutées dans l'ordre mentionné ci-après :
a) effectuer une diminution de charge au niveau d'un moteur thermique (VM) et de la deuxième machine électrique (4) afin de mettre hors charge un embrayage (K2) de la boîte de vitesses (2),
b) ouvrir l'embrayage (K2),
c) synchroniser un premier élément de changement de vitesse (B) de la boîte de vitesses (2),
d) fermer le premier élément de changement de vitesse (B) de sorte qu'il existe une liaison en propulsion entre la deuxième machine électrique (4) et un différentiel d'essieu (18),
e) effectuer une diminution de charge au niveau de la première machine électrique (3) et une augmentation de charge au niveau de la deuxième machine électrique (4) afin de mettre hors charge un deuxième élément de changement de vitesse (A) de la boîte de vitesses (2),
f) ouvrir le deuxième élément de changement de vitesse (A),
g) synchroniser un autre embrayage (K1),
h) fermer l'autre embrayage (K1) de sorte qu'il existe une liaison en propulsion entre le moteur thermique (VM) et la première machine électrique (3),
i) effectuer une augmentation de charge au niveau du moteur thermique (VM) et de la première machine électrique (3), la première machine électrique (3) fonctionnant en mode générateur.

7. Procédé selon l'une quelconque des revendications 1 à 6, **caractérisé en ce qu'**après la génération d'un autre signal de commutation, la première machine électrique (3) fonctionne en mode moteur et la deuxième machine électrique (4) fonctionne en mode générateur.

8. Procédé selon la revendication 7, **caractérisé en ce que** l'autre signal de commutation est généré si a) une température de la deuxième machine électrique (4) dépasse une valeur seuil, ou si b) une température de la deuxième machine électrique (4) dépasse une valeur seuil et une température des premières machines électriques (3) soupasse une autre valeur seuil.

9. Procédé selon la revendication 7 ou 8, **caractérisé en ce que** l'autre signal de commutation est généré si une différence entre une température de la deuxième machine électrique (4) et une température de la première machine électrique (3) dépasse une autre valeur seuil.

10. Procédé selon l'une quelconque des revendications 7 à 9, **caractérisé en ce que** pour la commutation de la première machine électrique (3) du mode générateur au mode moteur, les étapes suivantes sont exécutées dans l'ordre mentionné ci-dessous :
a) effectuer une diminution de charge au niveau d'un moteur thermique (VM) et de la première machine électrique (3) afin de mettre hors charge l'autre embrayage (K1) de la boîte de vitesse (2),
b) ouvrir l'autre embrayage (K1),
c) synchroniser un deuxième élément de changement de vitesse (A) de la boîte de vitesses (2),
d) fermer le deuxième élément de changement de vitesse (A) de sorte qu'il existe une liaison en propulsion entre la première machine électrique (3) et un différentiel d'essieu (18),
e) effectuer une diminution de charge au niveau de la deuxième machine électrique (4) et une augmentation de charge au niveau de la première machine électrique (3) afin de mettre hors charge un premier élément de changement de vitesse (B) de la boîte de vitesse (2),
f) ouvrir le premier élément de changement de vitesse (B),
g) synchroniser un embrayage (K2),
h) fermer l'embrayage (K2) de sorte qu'il existe une liaison en propulsion entre le moteur thermique (VM) et la deuxième machine électrique (4),
i) effectuer une augmentation de charge au niveau du moteur thermique (VM) et de la deuxième machine électrique (4), la deuxième machine électrique (4) fonctionnant en mode générateur.

11. Procédé selon les revendications 6 à 10, **caractérisé en ce que**
a) le moteur thermique (VM) fonctionne à vide pendant les étapes c) à h), et/ou **en ce que**
b) aux étapes b) à h), la première machine électrique (3) fonctionnant en mode moteur ou la deuxième machine électrique (4) fonctionnant en mode moteur est alimentée en énergie électrique à partir d'un accumulateur d'énergie électrique.

12. Procédé selon l'une quelconque des revendications 6 à 11, **caractérisé en ce que**
a) la fermeture du premier élément de changement de vitesse (B) réalise une deuxième vitesse, et/ou **en ce que**
b) la fermeture du deuxième élément de changement de vitesse (A) réalise une première vitesse.

13. Procédé selon l'une quelconque des revendications 6 à 12, **caractérisé en ce que**
a) la synchronisation du deuxième élément de changement de vitesse (A) est effectuée au moyen d'une régulation de vitesse de rotation de la première machine électrique (3), et/ou **en ce que**
b) la synchronisation du premier élément de changement de vitesse (B) est effectuée au moyen d'une régulation de vitesse de rotation de la deuxième machine électrique (4).

14. Boîte de vitesses (2), comprenant un moteur thermique (VM), une première machine électrique (3), une deuxième machine électrique (4), un embrayage (K2) et un autre embrayage (K1), la boîte de vitesses étant réalisée de façon à effectuer un procédé selon l'une quelconque des revendications 1 à 13.

15. Boîte de vitesses (2) selon la revendication 14, **caractérisée en ce que**
a) la première machine électrique (3) peut être reliée en propulsion au moteur thermique (VM) au moyen de l'autre embrayage (K1), et/ou **en ce que**
b) la deuxième machine électrique (4) peut être reliée en propulsion au moteur thermique (VM) au moyen de l'embrayage (K2).
